# EUROPÄISCHE PATENTSCHRIFT

(11) **EP 1 899 195 B1**
(45) Veröffentlichungstag und Bekanntmachung des Hinweises auf die Patenterteilung: **17.03.2010**
(21) Anmeldenummer: 06764049.0
(22) Anmeldetag: 04.07.2006
(51) Int. Cl.: B60P 1/08

(54) **SPANNRATSCHE ZUM SPANNEN UND HALTEN VON SPANNMITTELN**
CLAMPING RATCHET FOR CLAMPING AND HOLDING TENSIONING MEANS
CLIQUET DE SERRAGE PERMETTANT DE SERRER ET DE MAINTENIR DES MOYENS DE SERRAGE

(30) Priorität: 05.07.2005 DE 102005031735
(43) Veröffentlichungstag der Anmeldung: 19.03.2008
(73) Patentinhaber: Spanset Inter AG, 8832 Wollerau (CH)
(72) Erfinder: MAMIE , André, CH-8810 Horgen (CH)
(74) Vertreter: Cohausz & Florack
(86) Internationale Anmeldenummer: PCT/EP2006/063847
(87) Internationale Veröffentlichungsnummer: WO 2007/003636

(56) Entgegenhaltungen:
- DE-U1- 29 607 275
- US-A1- 2003 146 424

## Beschreibung

Die Erfindung betrifft eine Spannratsche zum Spannen und Halten von Spannmitteln, wie Gurtbändern, extrudierten Bändern, Seilen, Ketten und dergleichen, mit einer Konsole, mit einer in der Konsole drehbar gelagerten Wickelwelle, die durch mindestens zwei zwischen sich einen Abstand begrenzende Umlenkstege gebildet ist, mit einem Spannhebel zum Drehen der Wickelwelle um eine Drehachse und mit einer Verrasteinrichtung zum Verrasten der Wickelwelle in einer Drehstellung. Spannratschen dieser Art werden beispielsweise bei der Ladungssicherung eingesetzt, um das jeweils zur Sicherung der Ladung eingesetzte Spannmittel mit den für den sicheren Halt der Ladung erforderlichen hohen Zugkräften zu beaufschlagen.

Im praktischen Einsatz wird dazu die Konsole über ein geeignetes Halteelement an einen Anschlagpunkt angekoppelt, während das jeweils um die Ladung gelegte Spannmittel mit einem Endabschnitt durch den zwischen den Umlenkstegen vorhandenen Zwischenraum gesteckt wird. Beim anschließenden Verdrehen der durch die Umlenkstege gebildeten Wickelwelle wird der betreffende Endabschnitt von den Umlenkstegen mitgenommen und auf der Wickelwelle zu einem mehrlagigen Wickel aufgewickelt. Größe und Form des Wickels werden dabei bestimmt durch die Lage und Form der Umfangsflächen der Umlenkstege.

Typische Beispiele für Spannratschen sind in der EP 0 455 085 Bl, der US 5,282,296, der US 2003/0146424 oder der DE 296 07 275 U1 beschrieben. Bei diesen Spannratschen weisen die Umlenkstege eine identische, jeweils kreissektorförmig ausgebildete Querschnittsform auf. Der Radius der Krümmung der äußeren, mit dem Spannmittel in Berührung kommenden Umfangsfläche der Umlenkstege und ihr unveränderbarer Achsabstand zueinander sind dabei so gewählt, dass sie eine bis auf den Bereich des zwischen den Umlenkstegen vorhandenen Abstands eine im Querschnitt kreisförmige Wickelwelle definieren. Der Abstand der Umlenkstege ist ausreichend groß, um dort einen Endabschnitt des jeweiligen Spannmittels einschieben zu können.

Indem die Umlenkstege gemeinsam um die Drehachse der durch sie gebildeten Wickelwelle gewickelt werden, wird der zwischen ihnen eingeschobene Endabschnitt des Spannmittels mitgenommen und es entsteht auf der Wickelwelle ein mehrlagiger Wickel, dessen in Folge der auf das Spannmittel lastenden Zugkräfte eng aufeinander liegenden Lagen mit hoher Flächenreibung und entsprechend hoher Selbsthemmung auf der Wickelwelle gehalten sind.

Um die Wickelwelle zu lagern und gleichzeitig sicher und unter gleichmäßiger Belastung mit dem Anschlag verbinden zu können, ist bei Spannratschen der bekannten Art die Konsole üblicherweise U-förmig mit einer Basis ausgebildet, von deren Enden jeweils ein Schenkel ausgeht. Im Bereich der freien Enden der Schenkel ist eine kreisförmige Lageröffnung ausgebildet, deren Öffnungsradius mit einem geringen Übermaß dem Radius der Krümmung der Umfangsflächen der Umlenkstege angepasst ist. In den Lageröffnungen liegen die Enden der Umlenkstege der Wickelwelle mit Spiel ein, so dass sie um eine durch den Mittelpunkt der Lageröffnungen verlaufende Drehachse gedreht werden können.

Zum Spannen des Spannmittels sind die bekannten Ratschen mit einem drehfest mit den Umlenkstegen verbundenen, um die Drehachse der Wickelwelle verschwenkbaren Spannhebel ausgestattet. Der Spannhebel trägt darüber hinaus üblicherweise mindestens ein Ratschenzahnrad, das konzentrisch zur Drehachse der Wickelwelle gelagert und drehfest mit dem Spannhebel verbunden ist. Das Ratschenzahnrad wirkt mit einer an der Konsole gelagerten Klinke, dem so genannten "Sperrschieber", zusammen, der bei einer mit dem Verschwenken des Spannhebels einhergehenden Verdrehung des Ratschenzahnrades in die zwischen den Zähnen des Ratschenzahnrads vorhandenen Lücken einrastet und die jeweils erreichte Drehstellung der Wickelwelle fixiert.

Da im gespannten Zustand sowohl das auf der Spannratsche aufgewickelte Spannmittel als auch die an den jeweiligen Anschlag angekoppelte Konsole strafft, wird die Konsole im Idealfall in einer durch den Anschlag, die Drehachse der Wickelwelle und das Spannmittel verlaufenden Kraftlinie gehalten.

Für eine sichere Halterung der zu sichernden Ladung sind in der Regel hohe Spannungen im Spannmittel erforderlich. Um diese über die Spannratsche einstellen zu können, sind die bekannten Spannratschen in der Regel mit Spannhebeln von beträchtlicher Länge ausgestattet. Das Verhältnis der Länge des Hebelarms zum Radius des aufgewickelten Gurtbandes ergibt die Übersetzung der eingeleiteten Kraft. Diese Kraft ist zum einen durch die Fähigkeit des Benutzers begrenzt, der durch seine persönliche Stärke oder sein Gewicht den Spannhebel in die erforderliche Spannstellung bringt. Zum anderen wird die maximal zulässige von einem Benutzer aufzubringende Handkraft durch die Norm EN12195-2 beschränkt.

Es ist versucht worden, längere Spannhebel oder durch zusätzliche Übersetzung der Hebelkräfte die über eine Spannratsche aufbringbaren Spannkräfte unter Einhaltung der voranstehend genannten Grenzen weiter zu erhöhen. In der Praxis zeigte sich jedoch, dass die auf diese Weise erzeugten Spannkräfte zu so hohen Belastungen der Gesamtkonstruktion führten, dass Einzelteile der Spannratsche überbeansprucht werden. Eine den Anforderungen an die Dauerbelastbarkeit und Betriebssicherheit gerecht werdende Auslegung einer weiter gesteigerte Spannkräfte ermöglichenden Spannratsche hätte ein nicht mehr handhabbares Gewicht und ebenso schwer zu beherrschende Abmessungen zur Folge.

Ausgehend von dem voranstehend erläuterten Stand der Technik lag der Erfindung die Aufgabe zugrunde, eine einfach handhabbare Spannratsche zu schaffen, die einer höheren Belastung standhält und das Aufbringen von hohen Vorspannkräften unter Vermeidung einer unzulässigen Belastung des Benutzers ermöglicht.

Diese Aufgabe ist durch eine Spannratsche der eingangs angegebenen Art gelöst worden, bei der erfindungsgemäß die Lage mindestens der mit dem Spannmittel in Berührung kommenden äußeren Umfangsfläche der Umlenkstege veränderbar ist.

Bei einer erfindungsgemäßen Spannratsche sind die mit dem Spannmittel in Berührung kommenden Umfangsflächen der Umlenkstege, also die Umfangsflächen, die Form und Ausdehnung des aus dem Spannmittel auf der Wickelwelle gebildeten Wickels bestimmen, nicht mehr fest zueinander positioniert, sondern ihre relative Lage kann sich beispielsweise unter dem Einfluss der von dem Spannmittel aufgenommenen Kräfte oder von außen vorgegeben verändern.

Auf diese Weise wird zum einen erreicht, dass der um die Umlenkstege gewickelte Wickel eine optimal kompakte Form erhält, bei der die einzelnen Wickellagen stramm aufeinander liegen und zwischen ihnen dementsprechend hohe Selbsthemmungskräfte wirken. Zum anderen bewirkt die erfindungsgemäße Beweglichkeit der Umfangsflächen eine gleichmäßigere Belastung der Umlenkstege unter der Spannlast. Durch die Umfangsflächen der Umlenkstege wird die Form und Ausdehnung des Auges des um die Umlenkstege gebildeten Wickels bestimmt. Indem sich die Lage der Umfangsflächen unter Last verändert, beispielsweise so einstellt, dass der Durchmesser des Wickelauges kleiner wird, wird eine gleichmäßige Belastung der Umlenkstege erreicht. So stellt die bei einer erfindungsgemäß ausgebildeten Spannratsche selbsttätig eintretende Ausrichtung der Umfangsflächen der Umlenkstege sicher, dass die zu übertragende Spannkraft gleichmäßiger als beim Stand der Technik verteilt auf den Umlenkstegen lastet. Die beim Stand der Technik bestehende Gefahr, dass ein einziger Umlenksteg alleine mit der vollen Spannkraft belastet wird, besteht demzufolge bei einer erfindungsgemäßen Spannratsche nicht mehr. Im Ergebnis können erfindungsgemäße Spannratschen so mit verlängerten, eine hohe Spannkraft bei innerhalb der zulässigen Grenzen verbleibenden Betätigungskräften ermöglichenden Spannhebeln ausgestattet werden, ohne dass dazu eine insgesamt verstärkte Konstruktion einer solchen Spannratsche erforderlich ist. Erfindungsgemäß ausgebildete Spannratschen ermöglichen es auf diese Weise, durch Wahl günstigerer Hebelverhältnisse und -wirkungen bei gleichen, die Vorschriften stets einhaltenden Betätigungskräften höhere Vorspannkräfte auf das Spannmittel auszuüben, als dies beim Stand der Technik möglich ist.

Die erfindungsgemäße Beweglichkeit der Umfangsflächen kann dabei so ausgelegt werden, dass ein zum Einfädeln mit seinem einen Endabschnitt durch den zwischen den zwei oder mehr Umlenkstegen jeweils bestehenden Raum hindurch gestecktes Spannmittel in Folge der bei Belastung des Spannmittels eintretenden Lageänderung der Umfangsflächen zwischen den Umlenkstegen durch Form- oder Kraftschluss gehalten wird, so dass alle Umlenkstege zumindest einen Teil der insgesamt auf die Spannratsche und das Spannmittel wirkenden Last aufnehmen. Ebenso kann diese Auslegung der Beweglichkeit der Umfangsflächen dazu genutzt werden, die Größe des Auges des um die Umlenkstege gewickelten Spannmittelwickels auf ein Minimum zu reduzieren. Auf diese Weise lässt sich eine noch gleichmäßigere Aufteilung der Kräfte auf die Umlenkstege erzielen mit dem Erfolg, dass noch höhere Vorspannkräfte erzeugt werden können.

Mit einer erfindungsgemäßen Ratsche lassen sich dabei alle Spannmittel spannen, die sich in der beschriebenen Weise zu einem Wickel wickeln lassen, dessen Einzellagen mit der für die Kraftübertragung ausreichend dichte Packung aufeinander gewickelt werden können. Als für diese Zwecke besonders geeignet erwiesen haben sich Gurtbänder, extrudierte Bänder, Seile und dergleichen. Die Vorteile einer erfindungsgemäßen Spannratsche machen sich jedoch auch beim Spannen von Ketten oder vergleichbaren Spannmitteln bemerkbar.

Eine erste Möglichkeit, die erfindungsgemäße Beweglichkeit der Umfangsflächen zu realisieren, besteht darin, dass die Umlenkstege in bezogen auf die Drehachse der Wickelwelle radialer Richtung zur Vergrößerung ihres Achsabstandes verschiebbar gelagert sind. Bei dieser Ausgestaltung der Erfindung können sich die Umlenkstege beispielsweise in in der Konsole der Spannratsche ausgebildeten Führungen bewegen. Dazu können die Endabschnitte der Umlenkstege als Lagerabschnitte ausgebildet sein, die in entsprechende Führungsnuten oder -schlitze eingreifen. Abhängig von den in der Praxis eintretenden Belastungen und Bewegungen der Spannratsche insgesamt oder den Umlenkstegen selbst können dabei die betreffenden Führungselemente einen linearen oder kurvenförmigen Verlauf aufweisen, um die erfindungsgemäß angestrebte selbsttätige Verlagerung der Umfangsflächen so zu steuern, dass eine optimal gleichmäßige Belastung der Umlenkstege im praktischen Einsatz erreicht wird.

Alternativ oder ergänzend zu einer in radialer Richtung erfolgenden Verlagerung können die Umlenkstege zum Verändern der Lage ihrer äußeren, mit dem Spannmittel in Berührung kommenden Umfangsflächen um eine achsparallel zu ihrer Längsachse ausgerichtete Schwenkachse drehbar gelagert sein. Die angestrebte gleichmäßige Belastung und optimierte Formgebung des auf der durch die Umlenkstege gebildeten Wickelwelle erzeugten Wickels kann dabei dadurch zusätzlich unterstützt werden, dass die Schwenkachse der Umlenkstege in Bezug auf den Querschnitt der Umlenkstege außermittig angeordnet sind.

Eine besonders einfach und kostengünstig herzustellende Ausgestaltung der Erfindung ist dadurch gekennzeichnet, dass die Umlenkstege eine an einen Kreis angenäherte Querschnittsform aufweisen. In diesem Fall lassen sich als Umlenkstege einfache Bolzen verwenden, die von einem Stangenmaterial abgelängt werden.

Eine verbesserte Führung des Spannmittels auf der Wickelwelle und eine dementsprechend verbesserte Ausbildung des Wickels kann dagegen dadurch erreicht werden, wenn die Umlenkstege eine an einen Kreissektor angenäherte Querschnittsform aufweisen.

Weiter optimiert werden kann die Funktion und gleichmäßige Belastung der Teile einer erfindungsgemäßen Ratsche dadurch, dass die Umlenkstege eine an die Form eines Nockens angenäherte Querschnittsform aufweisen. Gerade dann, wenn derart nockenförmige Umlenkstege um eine exzentrisch zu ihrem Mittelpunkt gelagerte, sich parallel zu ihrer Längsachse erstreckenden Schwenkachse verschwenkbar angeordnet sind, ergibt sich eine im Hinblick auf die erfindungsgemäß angestrebte und zu einer gleichmäßigen Belastung der Umlenkstege führende Ausrichtung der Umfangsflächen besonders sicher.

Sollen die Umlenkstege jeweils selbst um eine eigene Schwenkachse geschwenkt werden, so kann dazu an ihren seitlichen Enden jeweils ein Lagerabschnitt vorhanden sein, mit dem sie jeweils in der Konsole gelagert sind. Dies ist insbesondere dann zweckmäßig, wenn die Umlenkstege außerhalb ihrer Lagerabschnitte eine von der Kreisform abweichende Durchmesserform besitzen.

Eine weitere im Hinblick auf eine einfache Herstellung besonders günstige Ausgestaltung der Erfindung ist dadurch gekennzeichnet, dass die Umlenkstege mehrteilig zusammengesetzt sind. Dazu können sie erfindungsgemäß mindestens aus einem Umfangsflächenelement, das die mit dem Spannmittel in Kontakt kommende Umfangsfläche trägt und einem Lagerelement gebildet sein, über und / oder um das die Lageveränderung der Umfangsfläche erfolgt. Optimierte Gewichtsverhältnisse bei gleichzeitig minimierten Herstellkosten lassen sich dabei dadurch erreichen, dass das Lagerelement ein mit seinen Endabschnitten in der Konsole gelagerter Bolzen und das Umfangsflächenelement aus einem um den Bolzen gebogenes Blechteil besteht.

Neben einer vereinfachten Herstellung lassen sich bei mehrteiliger Ausbildung der Umlenkstege Beweglichkeiten der Umfangsflächen in mehreren Freiheitsgraden ermöglichen. So kann zum einen das Umfangsflächenelement drehbar auf dem Lagerelement gelagert sein. Gleichzeitig kann jedoch das Lagerelement in einer Führung der Konsole geführt sein, um beispielsweise eine Lageänderung der äußeren Umfangsflächen der Umlenkstege durch eine Änderung von deren Achsabstand zu ermöglichen.

Eine besonders einfache Möglichkeit, den Drehantrieb der Wickelwelle bei gleichzeitig größtmöglicher Bewegungsfreiheit der äußeren Umfangsflächen der Umlenkstege durchzuführen, besteht darin, dass die Umlenkstege gemeinsam in einem Lagerteil gelagert sind, das drehbar in der Konsole gelagert ist. Das Lagerteil kann in diesem Fall für die Ankopplung an den Spannhebel verwendet werden und gleichzeitig die für die Verstellung des Achsabstandes erforderlichen Führungen und / oder die Lager aufweisen, die zum Verschwenken der Umlenkstege um ihre jeweilige Schwenkachse benötigt werden.

Selbstverständlich sind die voranstehenden Erläuterungen nicht auf solche Spannratschen beschränkt, die nur zwei Umlenkachsen aufweisen. So wirkt sich die Erfindung ebenso wirkungsvoll aus, wenn eine erfindungsgemäß ausgestaltete Spannratsche drei und mehr Umlenkstege besitzt. Wesentlich ist lediglich, dass dabei die Umfangsflächen der Umlenkstege in erfindungsgemäßer Weise beweglich sind, um die angestrebte Vergleichmäßigung der Belastung aller Umlenkstege und die ebenso angestrebte Ausbildung eines in seiner Form optimierten Wickels auf der durch die Umlenkstege gebildeten Wickelwelle zu erreichen.

Um sicher zu verhindern, dass es durch die erfindungsgemäße Beweglichkeit der Umlenkflächen zu einer Beschädigung des Spannmittels kommt, ist gemäß einer Ausgestaltung der Erfindung mindestens eine der Umlenkflächen nur begrenzt beweglich. Zu diesem Zweck kann mindestens einer der Umlenkflächen ein Anschlag zugeordnet sein, der den Weg, über den die Umlenkfläche beweglich ist, begrenzt. Durch einen solchen Anschlag kann sicher verhindert werden, dass es zu einem Abquetschen oder Einschneiden des Spannmittels insbesondere in dem zwischen den Umlenkstegen vorhandenen Raum kommt.

Nachfolgend wird die Erfindung anhand einer ein Ausführungsbeispiel darstellenden Zeichnung näher erläutert. Es zeigen jeweils schematisch:

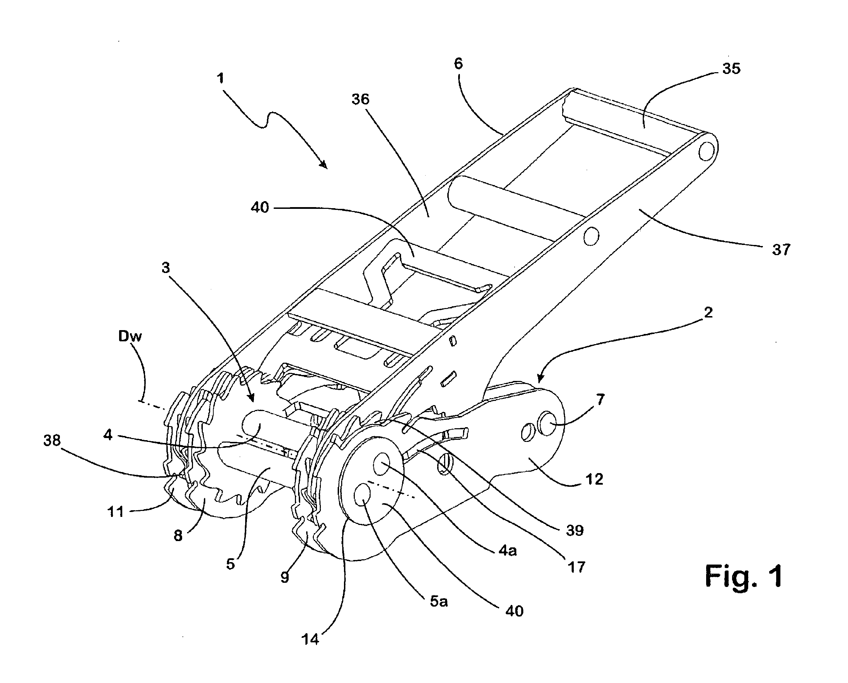

- Fig. 1: eine Spannratsche in perspektivischer Ansicht;

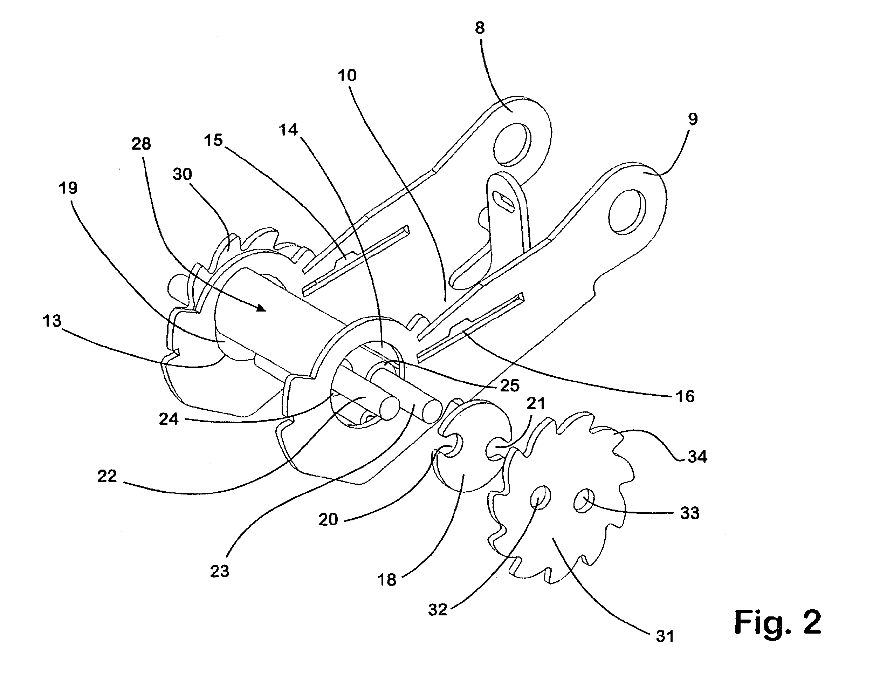

- Fig. 2: eine in der Spannratsche gemäß Fig. 1 eingesetzte Konsole mit Umlenkstegen, Lagerteil und Ratschenzahnrad in einer perspektivischen Explosionsdarstellung;

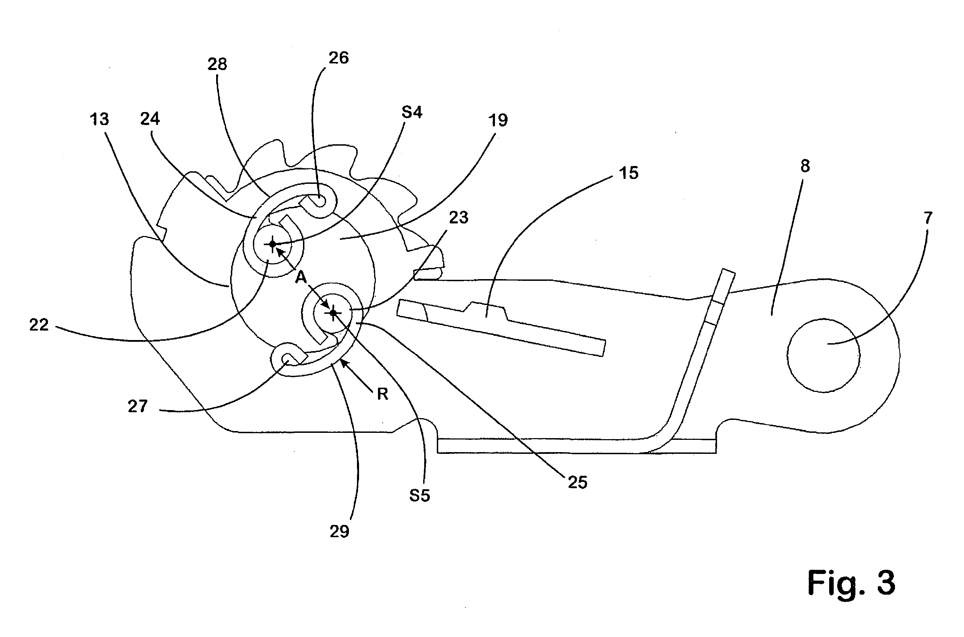

- Fig. 3: die Konsole gemäß Fig. 2 in einem Längsschnitt;

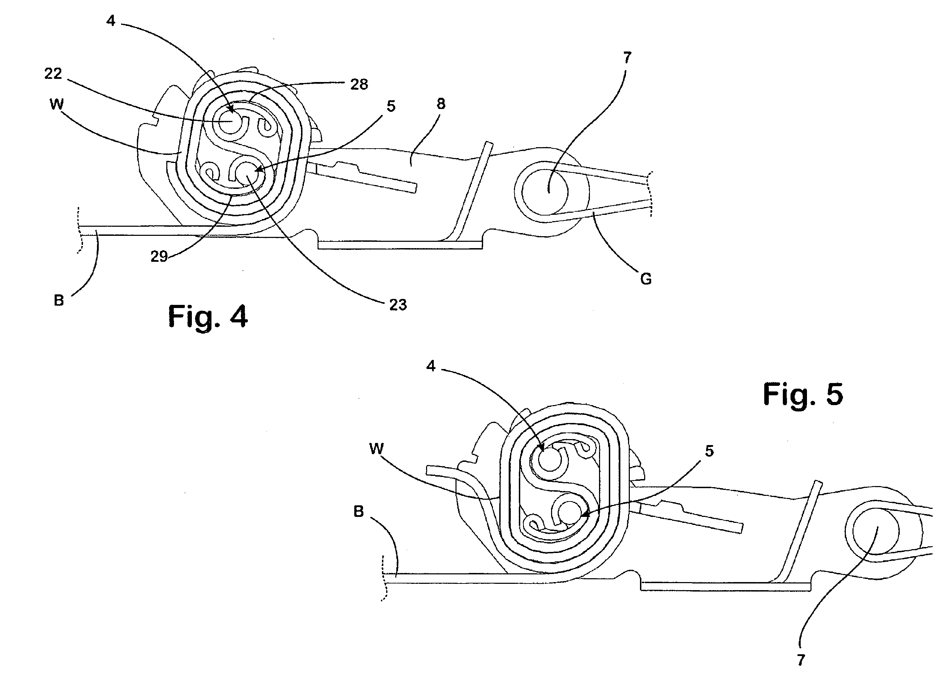

- Fig. 4: die Konsole gemäß Fig. 2 in einem Längsschnitt in einer ersten Betriebsstellung;
- Fig. 5: die Konsole gemäß Fig. 2 in dem Längsschnitt in einer zweiten Betriebsstellung;
- Fig. 6: einen alternativen Umlenksteg in perspektivischer Ansicht.

Die Spannratsche 1 zum Spannen eines Bands B weist eine Konsole 2, eine durch zwei Umlenkstege 4,5 gebildete, in der Konsole 2 drehbar gelagerte Wickelwelle 3 und einen Spannhebel 6 zum Drehen der Wickelwelle 3 um eine Drehachse Dw auf. Bei dem Band B kann es sich um ein konventionelles Gurtband oder beispielsweise um ein durch Extrusion hergestelltes Flachband handeln.

Die Konsole 2 weist die Grundform eines U's auf, dessen Basis durch einen Bolzen 7 gebildet ist, über den die Spannratsche 1 im praktischen Einsatz mittels eines Gurtstücks G an einen hier nicht dargestellten festen Anschlagpunkt angeschlossen ist. Mit seinen Endabschnitten ist der Bolzen 7 in jeweils eine Öffnung eingepresst, die in jeweils ein inneres Schenkelblech 8,9 der Konsole 2 eingeformt ist. Die inneren Schenkelbleche 8,9 sind einstückig miteinander über eine sich zwischen ihnen erstreckende Basisplatte 10 verbunden. Auf jeder Seite der Konsole 2 ist ein mit einem geringen Abstand zu dem jeweiligen inneren Schenkelblech 8,9 angeordnetes äußeres Schenkelblech 11,12 über eine entsprechende Öffnung auf den jeweiligen Endabschnitt des Bolzens 7 aufgepresst.

Die inneren und äußeren Schenkelbleche 8,9,11,12 weisen eine identische Form auf und sind mit hinsichtlich ihrer Lage und Anordnung identischen Lochungen und Ausschnitten versehen. Dieser Vorgabe entsprechend sind in ihren vorderen freien Endabschnitt in die Schenkelbleche 8,9,11,12 jeweils eine kreisrunde Lageröffnung 13,14 eingeformt. In den mittleren Abschnitt der Schenkelbleche 8,9,11,12 ist zusätzlich jeweils ein Führungsschlitz 15,16 für einen Sperrschieber 17 eingeformt, der durch eine nicht dargestellte Feder in Richtung des vorderen freien Endes der Schenkelbleche 8,9,11,12 belastet ist.

In den Lageröffnungen 13,14 sitzt mit Spiel frei drehbar jeweils ein kreisscheibenförmiges Lagerteil 18,19, in das jeweils zwei Lageröffnungen 20,21 eingeformt sind. Die Lageröffnungen 20,21 sind im selben Abstand zum Mittelpunkt des jeweiligen Lagerteils 18,19 auf einer durch den Mittelpunkt des betreffenden Lagerteils 18,19 verlaufenden Achse angeordnet.

In den einander gegenüberliegenden Lageröffnungen 20,21 der Lagerteile 18,19 sind die Lagerabschnitte 4a,5a von bolzenförmig ausgebildeten Lagerelementen 22,23 drehbar gelagert, von denen jeweils einer Teil eines der Umlenkstege 4,5 ist. Die Umlenkstege 4,5 sind zweiteilig ausgebildet und umfassen neben ihrem jeweiligen Lagerelement 22,23 jeweils ein Umfangsflächenelement 24,25.

Die Umfangsflächenelemente 24,25 sind jeweils aus einem Blechzuschnitt gebogen, der zunächst um das jeweilige Lagerelement 22,23 gelegt und anschließend in einer mit einem großen Radius R gekrümmten Krümmung zu seinem freien Ende geführt ist, das in einer engen Umbiegung 26,27 umgebogen ist. Auf diese Weise weisen die Umfangsflächenelemente 24,25 im Querschnitt gesehen eine Nockenform mit einem dickeren Abschnitt im um das jeweilige Lagerelement 22,23 gelegten Bereich und einem dünneren, durch die jeweilige Umbiegung 26,27 gebildeten Spitzenabschnitt im Bereich des freien Endes der Umfangsflächenelemente 24,25 auf. Dabei ist die jeweilige Schwenkachse S4,S5 der Umlenkstege 4,5 exzentrisch zum Mittelpunkt des Querschnitts der Umlenkstege 4,5 angeordnet.

Die Umfangsflächenelemente 24,25 sind so eng um das ihnen jeweils zugeordnete Lagerelement 22,23 gebogen, dass sie kraftschlüssig mit ihm verbunden sind. Ihre Breite entspricht mit einem geringen Untermaß der zwischen den inneren Schenkelblechen 8,9 vorhandenen lichten Weite. Auf diese Weise lassen sich die durch jeweils eines der Lagerelemente 22,23 und eines der Umfangsflächenelemente 24,25 gebildeten Umlenkstege 4,5 um eine koaxial zur Längsachse der Lagerelemente 22,23 verlaufende Schwenkachse S4,S5 schwenken.

Die Durchmessergröße und Querschnittsform der Wickelwelle 3 ist durch die Lage und Form der mit dem Radius R gekrümmten äußeren Umfangsfläche 28,29 der Umfangsflächenelemente 24,25 bestimmt. Die Umfangsflächen 28,29 der Umfangsflächenelemente 24,25 bilden dabei diejenige äußere Umfangsfläche, die bei auf der Wickelwelle 3 gewickeltem Band B mit diesem Band B in Berührung kommt.

Die Schwenkachsen S4,S5 sind achsparallel zueinander in einem Abstand A beabstandet angeordnet, so dass zwischen ihnen ein Freiraum begrenzt ist, in den zum Aufwickeln ein Endabschnitt des Bands B eingeführt werden kann. Sollen die Umfangsflächen 28,29 der Umlenkstege 4,5 nicht nur durch eine Verschwenkung um die Schwenkachsen 4a,5a verändert werden können, sondern auch durch eine Veränderung des Abstand A durch Verschieben der Schwenkachsen S4,S5 in radialer Richtung, so können dazu die Lageröffnungen 20,21 der Lagerteile 18,19 in hier nicht dargestellter Weise nach Art von Führungsschlitzen ausgebildet werden.

Die Länge der Lagerabschnitte 4a,5a der Umlenkstege 4,5 ist so bemessen, dass die Lagerabschnitte 4a,5a nach außen über die Lagerteile 18,19 und das jeweilige Schenkelblech 8,9 hinaus stehen. Auf jeder äußeren Seite der Schenkelbleche 8,9 ist auf die dort über die Lagerteile 18,19 hinaus stehenden Lagerabschnitte 4a,5a der Umlenkstege 4,5 ein Ratschenzahnrad 30,31 aufgeschoben. Jedes der Ratschenzahnräder 30,31 weist dazu zwei der Lage und Größe der Lagerabschnitte 4a,5a der Umlenkstege 4,5 angepasste Öffnungen 32,33 auf. Die Ratschenzahnräder 30,31 sind in an sich bekannter Weise so gezahnt, dass ihre Zähne 34 unter Last mit ihrer steilen Flanke an dem in die Lücke zwischen den Zähnen 34 greifende Kante des Transportschiebers 17 abgestützt sind und die Drehstellung der Wickelwelle 3 verriegelt ist, während sie bei einer Drehung der Wickelwelle 3 in Wickelrichtung mit ihrer gerundeten Flanke sich an der betreffenden Kante des Transportschiebers 17 vorbeischieben.

Der Spannhebel 6 besitzt ebenfalls die Grundform eines U's, dessen Basis durch eine Handstange 35 gebildet ist, an die sich seitliche Schenkelbleche 36,37 anschließen. Die Länge L der Schenkelbleche 36,37 ist annähernd doppelt so lang wie die Länge der inneren und äußeren Schenkelbleche 8,9,11,12 der Konsole 2. An ihren freien Enden weisen die Schenkelbleche 36,37 des Spannhebels 6 jeweils zwei hinsichtlich ihrer Größe, Form und Lage an die Lagerteile 18,19 angepasste, hier nicht dargestellte Lageröffnungen auf, über die der Spannhebel 6 frei drehbar auf den Lagerteilen 18,19 gelagert ist.

Auf jeder Seite zusätzlich von außen auf die Lagerabschnitte 4a,5a der Umlenkstege 4,5 aufgeschoben ist jeweils ein weiteres Ratschenzahnrad 38,39, das jeweils genauso ausgebildet ist wie die Ratschenzahnräder 30,31. Den äußeren seitlichen Abschluss des Aufbaus der Konsole 2 bildet das jeweilige äußere Schenkelblech 11,12, in dessen Lageröffnung 14 jeweils ein den Lagerteilen 18,19 entsprechendes kreisscheibenförmiges Lagerteil 40 drehbar gelagert ist und in dessen Lageröffnungen die Enden der Lagerabschnitte 4a,5a der Umlenkstege 4,5 sitzen.

In dem Spannhebel 6 ist eine Sperrklinke 41 geführt, die mittels einer nicht dargestellten Feder in einer Mitnahmestellung gehalten ist, in der ihre Sperrkante in die zwischen den Zähnen 34 der Ratschenzahnräder 30,31,38,39 vorhandenen Zahnlücken greift.

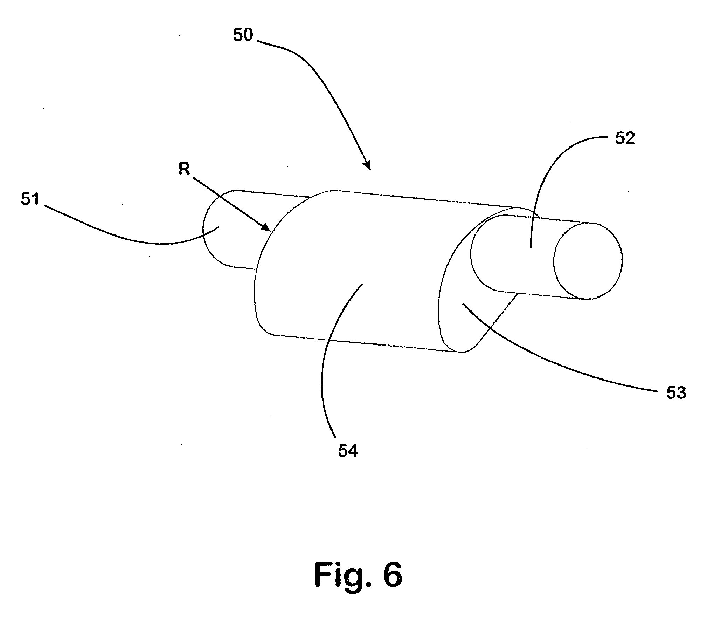

Alternativ zu der voranstehend beschriebenen mehrteiligen Ausgestaltung können die Umlenkstege 4,5 auch einstückig aus dem Vollen geformt sein. Ein entsprechend gestalteter Umlenksteg 50 ist in Fig. 6 dargestellt. Ein solcher Umlenksteg 50 kann beispielsweise durch ein spanabhebendes Verfahren hergestellt werden. Dabei weist der Umlenksteg 50 einen mittleren Abschnitt 51 auf, der ebenfalls eine an eine Nockenform angenäherte Querschnittsform besitzt. Daran einstückig angeschlossen sind versetzt zur Querschnittsmitte ausgerichtete Lagerabschnitte 52,53, über die die schwenkbare Lagerung des Umlenksteges 50 in der gleichen Weise erfolgt, wie die Lagerung der Umlenkstege 4,5 über deren Lagerabschnitte 4a,5a. Die mit dem Band B im praktischen Einsatz in Berührung kommende Umfangsfläche 54 des Umlenksteges 50 ist durch die mit einem großen Radius R gekrümmte Außenfläche des mittleren Abschnitts 51 des Umlenksteges 50 definiert.

Zum Spannen des Bandes B wird dessen Ende durch den zwischen den Umlenkstegen 4,5 begrenzten Raum gefädelt und einmal um die Wickelwelle 3 gelegt, so dass die äußeren Umfangsflächen 28,29 der Umlenkstege 4,5 vom Band B bedeckt sind. Anschließend wird die Wickelwelle 3 durch mehrfaches Heben und Senken des Spannhebels 6 um ihre Drehachse Dw gedreht, so dass sich auf der Wickelwelle 3 ein mehrlagiger Wickel W bildet. Im Zuge dieses Wickelvorgangs wird das Band B mehr und mehr gespannt, so dass auch die Wicklungen des Wickels W immer stärker und dichter zusammengezogen werden. In Folge dieser stärker werdenden Belastungen richten sich die über ihre Lagerelemente 22,23 schwenkbar gelagerten Umlenkstege mit ihren Umfangsflächenelementen 24,25 entsprechend ihrer Ausrichtung in Bezug auf die Kraftwirkungslinie aus, so dass die äußeren, mit dem Band B in Berührung kommenden und von den Spannkräften direkt belasteten Umfangsflächen 28,29 der Umlenkelemente 4,5 sich der jeweiligen Belastung entsprechend ausrichten. In Folge dessen bildet der Wickel W eine dicht gepackte Form aus, durch die sichergestellt ist, dass die Umlenkstege 4,5 gleichmäßig durch die auf die Wickelwelle 3 insgesamt lastenden Kräfte belastet werden. Im Ergebnis können so über einen deutlich verlängerten Spannhebel 6 hohe Spannkräfte auf das Band B aufgebracht werden, ohne dass der Benutzer übermäßig große Kräfte aufbringen muss und die Einzelteile der Spannratsche 1 überlastet werden.

### BEZUGSZEICHEN

- 1: Spannratsche
- 2: Konsole
- 3: Wickelwelle
- 4,5: Umlenkstege
- 4a,5a: Lagerabschnitte der Umlenkstege 4,5
- 6: Spannhebel
- 7: Bolzen
- 8,9: innere Schenkelbleche der Konsole 2
- 10: Basisplatte
- 11,12: äußere Schenkelbleche der Konsole 2
- 13,14: Lageröffnungen der Schenkelbleche 8,9,11,12
- 15,16: Führungsschlitz
- 17: Transportschieber
- 18,19: Lagerteile
- 20,21: Lageröffnungen
- 22,23: Lagerelemente
- 24,25: Umfangsflächenelemente
- 26,27: Umbiegung
- 28,29: Umfangsfläche der Umfangsflächenelemente 24,25
- 30,31: Ratschenzahnräder
- 32,33: Öffnungen der Ratschenzahnräder 30,31
- 34: Zähne der Ratschenzahnräder 30,31
- 35: Handstange
- 36,37: Schenkelbleche des Spannhebels 6
- 38,39: Ratschenzahnräder
- 40: Lagerteil
- 41: Sperrklinke
- 50: Umlenksteg
- 51: mittlerer Abschnitt des Umlenkstegs 50
- 52,53: Lagerabschnitte des Umlenkstegs 50
- 54: Umfangsfläche des Umlenksteges 50

- A: Abstand zwischen den Umlenkstegen 4,5
- B: Band
- Dw: Drehachse
- G: Gurtstück
- R: Krümmungsradius der Umfangsflächen 28,29
- S4,S5: Schwenkachse der Umlenkstege 4,5
- W: Wickel

## Patentansprüche

1. Spannratsche zum Spannen und Halten von Spannmitteln, wie Gurtbändern (B), extrudierten Bändern, Seilen, Ketten und dergleichen, mit einer Konsole (2), mit einer in der Konsole (2) drehbar gelagerten Wickelwelle (3), die durch mindestens zwei zwischen sich einen Abstand (A) begrenzende Umlenkstege (4,5;50) gebildet ist, und mit einem Spannhebel (6) zum Drehen der Wickelwelle (6) um eine Drehachse (Dw), **dadurch**
**gekennzeichnet, dass** sich die relative Lage mindestens der mit dem Spannmittel (B) in Berührung kommenden äußeren Umfangsfläche (28,29,54) der Umlenkstege (4,5;50) unter dem Einfluß der von dem Spannmittel (B) aufgenommenen Kräfte oder von außen vorgegeben ändern kann.

2. Spannratsche nach Anspruch 1, **dadurch**
**gekennzeichnet, dass** die Umlenkstege (4,5;50) in bezogen auf die Drehachse (Dw) radialer Richtung zur Vergrößerung ihres Achsabstandes (A) verschiebbar gelagert sind.

3. Spannratsche nach Anspruch 2, **dadurch**
**gekennzeichnet, dass** die Umlenkstege (4,5;50) mit ihren seitlichen Enden in einer Führung geführt sind.

4. Spannratsche nach Anspruch 3, **dadurch gekennzeichnet, dass** die Führung eine Kurvenbahn beschreibt.

5. Spannratsche nach einem der voranstehenden Ansprüche, **dadurch gekennzeichnet, dass** die Umlenkstege (4,5;50) um eine achsparallel zu ihrer Längsachse ausgerichtete Schwenkachse (S4,S5;50) drehbar gelagert sind.

6. Spannratsche nach Anspruch 5, **dadurch gekennzeichnet, dass** die Schwenkachse (S4, S5; 50) der Umlenkstege (4, 5; 50) in Bezug auf den Querschnitt der Umlenkstege (4,5;50) außermittig angeordnet ist.

7. Spannratsche nach einem der voranstehenden Ansprüche, **dadurch gekennzeichnet, dass** die Umlenkstege (4,5;50) eine an einen Kreis angenäherte Querschnittsform aufweisen.

8. Spannratsche nach einem der Ansprüche 1 bis 6,
**dadurch gekennzeichnet, dass** die Umlenkstege (4,5;50) eine an einen Kreissektor angenäherte Querschnittsform aufweisen.

9. Spannratsche nach einem der Ansprüche 1 bis 6,
**dadurch gekennzeichnet, dass** die Umlenkstege (4,5;50) eine an die Form eines Nockens angenäherte Querschnittsform aufweisen.

10. Spannratsche nach einem der voranstehenden Ansprüche, **dadurch gekennzeichnet, dass** die Umlenkstege (4,5;50) an ihren seitlichen Enden jeweils einen Lagerabschnitt (4a,5a) aufweisen, mit den sie in der Konsole (2) gelagert sind.

11. Spannratsche nach Anspruch 10, **dadurch gekennzeichnet, dass** die Umlenkstege (4, 5; 50) über ihre Lagerabschnitte (4a,5a;51,52) in der Konsole (2) beweglich gelagert sind.

12. Spannratsche nach einem der voranstehenden Ansprüche, **dadurch gekennzeichnet, dass** die Umlenkstege (4,5;50) mindestens aus einem Umfangsflächenelement (24,25;50), das die mit dem Spannmittel (B) in Kontakt kommende Umfangsfläche (28,29) trägt, und einem Lagerelement (22,23) gebildet sind, über und / oder um das die Lageveränderung der Umfangsfläche (28,29) erfolgt.

13. Spannratsche nach Anspruch 12, **dadurch gekennzeichnet, dass** das Lagerelement (22,23) ein mit seinen Lagerabschnitten (4a,5a) in der Konsole (2) gelagerter Bolzen und das Umfangsflächenelement (24,25;50) aus einem um den Bolzen gebogenes Blechteil besteht.

14. Spannratsche nach einem der Ansprüche 12 oder 13, **dadurch gekennzeichnet, dass** das Umfangsflächenelement (24,25;50) drehbar auf dem Lagerelement (22,23) gelagert ist.

15. Spannratsche nach einem der voranstehenden Ansprüche, **dadurch gekennzeichnet, dass** die Umlenkstege (4,5;50) gemeinsam in einem Lagerteil (18,19) gelagert sind, das drehbar in der Konsole (2) gelagert ist.

16. Spannratsche nach einem der voranstehenden Ansprüche, **dadurch gekennzeichnet, dass** eine Verrasteinrichtung zum Verrasten der Wickelwelle (3) in einer Drehstellung vorgesehen ist.

17. Spannratsche nach einem der voranstehenden Ansprüche, **dadurch gekennzeichnet, dass** mindestens einer der Umlenkflächen ein Anschlag zugeordnet ist, der den Weg, über den die Umlenkfläche beweglich ist, begrenzt.

## Claims

1. Tensioning ratchet for tautening and holding tensioning means, such as webbings (B), extruded straps, ropes, chains and the like, comprising a console (2), with a winding-on shaft (3) rotatably mounted in the console (2), which is formed by at least two direction reversal bars (4, 5; 50), delimiting a distance (A) between one another, and with a tensioning lever (6) for turning the winding-on shaft (6) about an axis of rotation (Dw), **characterized in that** the relative position at least of the outer circumferential face (28, 29, 54) of the direction reversal bars (4, 5; 50), coming into contact with the tensioning means (B) can change under the influence of the forces absorbed by the tensioning means (B) or imposed from outside.

2. Tensioning ratchet according to Claim 1, **characterized in that** the direction reversal bars (4, 5; 50) are adjustably mounted relative to the axis of rotation (Dw) in the radial direction for enlarging their axial distance (A).

3. Tensioning ratchet according to Claim 2, **characterized in that** the direction reversal bars (4, 5; 50) at their lateral ends move in a guide.

4. Tensioning ratchet according to Claim 3, **characterized in that** the guide describes a curved track.

5. Tensioning ratchet according to any one of the above claims, **characterized in that** the direction reversal bars (4, 5; 50) are rotatably mounted about a pivot axis (S4, S5; 50), aligned parallel to their longitudinal axis.

6. Tensioning ratchet according to Claim 5, **characterized in that** the pivot axis (S4, S5; 50) of the direction reversal bars (4, 5; 50) is arranged eccentrically to the cross section of the direction reversal bars (4, 5; 50).

7. Tensioning ratchet according to any one of the above claims, **characterized in that** the direction reversal bars (4, 5; 50) have a cross-sectional shape approximate to a circle.

8. Tensioning ratchet according to any one of Claims 1 to 6, **characterized in that** the direction reversal bars (4, 5; 50) have a cross-sectional shape approximate to a circular sector.

9. Tensioning ratchet according to any one of Claims 1 to 6, **characterized in that** the direction reversal bars (4, 5; 50) have a cross-sectional shape approximate to the shape of a cam.

10. Tensioning ratchet according to any one of the above claims, **characterized in that** the direction reversal bars (4, 5; 50) at their lateral ends have a bearing section (4a, 5a) in each case, with which they are mounted in the console (2).

11. Tensioning ratchet according to Claim 10, **characterized in that** the direction reversal bars (4, 5; 50) are variably mounted in the console (2) by means of their bearing sections (4a, 5a; 51, 52).

12. Tensioning ratchet according to any one of the above claims, **characterized in that** the direction reversal bars (4, 5; 50) are formed at least from a circumferential face element (24, 25; 50), which supports the circumferential face (28,29), coming into contact with the tensioning means (B), and from a bearing element (22, 23), by means of which and/or about which the change in position of the circumferential face (28, 29) takes place.

13. Tensioning ratchet according to Claim 12, **characterized in that** the bearing element (22, 23) is a pin mounted with its bearing sections (4a, 5a) in the console (2) and the circumferential face element (24, 25; 50) consists of a sheet metal part curved around the pin.

14. Tensioning ratchet according to any one of Claims 12 or 13, **characterized in that** the circumferential face element (24, 25; 50) is rotatably mounted on the bearing element (22, 23).

15. Tensioning ratchet according to any one of the above claims, **characterized in that** the direction reversal bars (4, 5; 50) are jointly fitted in one bearing part (18, 19), which is rotatably mounted in the console (2).

16. Tensioning ratchet according to any one of the above claims, **characterized in that** a lock mechanism is provided to lock the winding-on shaft (3) in a turning position.

17. Tensioning ratchet according to any one of the above claims, **characterized in that** a shoulder is allocated at least to one of the direction reversal surfaces, which limits the distance over which the direction reversal surface can be varied.

## Revendications

1. Cliquet de serrage pour le serrage et le maintien de moyens de serrage, tels que des sangles (B), des bandes extrudées, des câbles, des chaînes et produits analogues, avec une console (2), avec un arbre enrouleur (3), monté à rotation dans la console (2), lequel est formé par au moins deux barres déflectrices (4, 5 ; 50), qui présentent entre elles un intervalle (A), et avec un levier de serrage (6) pour faire tourner l'arbre enrouleur (6) autour d'un axe de rotation (Dw), **caractérisé en ce que** la position relative d'au moins la face latérale externe (28, 29, 54) des barres déflectrices (4, 5 ; 50), entrant en contact avec les moyens de serrage (B), peut être modifiée sous l'influence des forces absorbées par les moyens de serrage (B) ou en provenance de l'extérieur.

2. Cliquet de serrage selon la revendication 1, **caractérisé en ce que** les barres déflectrices (4, 5 ; 50) sont montées, déplaçables dans la direction radiale par rapport à l'axe de rotation (Dw), pour élargir leur intervalle axial (A).

3. Cliquet de serrage selon la revendication 2, **caractérisé en ce que** les barres déflectrices (4, 5 ; 50) sont conduites, par leurs extrémités latérales, dans un dispositif de guidage.

4. Cliquet de serrage selon la revendication 3, **caractérisé en ce que** la voie de guidage décrit une courbe.

5. Cliquet de serrage selon l'une des revendications précédentes, **caractérisé en ce que** les barres déflectrices (4, 5 ; 50) sont montées à rotation autour d'un axe de pivotement (S4, S5 ; 50), qui est orienté parallèlement à leur axe longitudinal.

6. Cliquet de serrage selon la revendication 5, **caractérisé en ce que** l'axe de pivotement (S4, S5 ; 50) des barres déflectrices (4, 5 ; 50) est excentré par rapport à la section transversale des barres déflectrices (4, 5 ; 50).

7. Cliquet de serrage selon l'une des revendications précédentes, **caractérisé en ce que** les barres déflectrices (4, 5 ; 50) présentent une section transversale de forme approximativement circulaire.

8. Cliquet de serrage selon l'une des revendications 1 à 6, **caractérisé en ce que** les barres déflectrices (4, 5 ; 50) présentent une section transversale, dont la forme correspondant approximativement à un secteur de cercle.

9. Cliquet de serrage selon l'une des revendications 1 à 6, **caractérisé en ce que** les barres déflectrices (4, 5 ; 50) présentent une section transversale, dont la forme correspondant approximativement à la forme d'une came.

10. Cliquet de serrage selon l'une des revendications précédentes, **caractérisé en ce que** les barres déflectrices (4, 5 ; 50) présentent chacune, à leurs extrémités latérales, une section de support (4a, 5a), au moyen desquelles elles sont montées dans la console (2).

11. Cliquet de serrage selon la revendication 10, **caractérisé en ce que** les barres déflectrices (4, 5 ; 50) sont montées, de manière mobile, dans la console (2), par l'intermédiaire de leurs sections de support (4a, 5a ; 51, 52).

12. Cliquet de serrage selon l'une des revendications précédentes, **caractérisé en ce que** les barres déflectrices (4, 5 ; 50) sont formées par un élément périphérique (24, 25 ; 50), qui porte la surface périphérique (28, 29) entrant en contact avec les moyens de serrage (B), et par un organe d'appui (22, 23), sur et / ou autour duquel s'effectue le changement de position de la surface périphérique (28, 29).

13. Cliquet de serrage selon la revendication 12, **caractérisé en ce que** l'organe d'appui (22, 23) consiste en un axe, monté, avec ses sections de support (4a, 5a), dans la console (2), et que l'élément périphérique (24, 25 ; 50) consiste en une pièce en tôle, cintrée autour de l'axe.

14. Cliquet de serrage selon revendication 12 ou 13, **caractérisé en ce que** l'élément périphérique (24, 25 ; 50) est monté à rotation sur un organe d'appui (22, 23).

15. Cliquet de serrage selon l'une des revendications précédentes, **caractérisé en ce que** les barres déflectrices (4, 5 ; 50) sont montées en commun dans un logement (18, 19), qui est monté à rotation dans la console (2).

16. Cliquet de serrage selon l'une des revendications précédentes, **caractérisé en ce qu'**un dispositif d'encliquetage est prévu pour l'encliquetage de l'arbre enrouleur (3) dans une position de rotation.

17. Cliquet de serrage selon l'une des revendications précédentes, **caractérisé en ce qu'**au moins à l'une des surfaces déflectrice est associée une butée, qui limite le parcours sur lequel la surface déflectrice peut être déplacée.
